# EUROPÄISCHE PATENTSCHRIFT

(11) **EP 0 972 180 B1**
(45) Veröffentlichungstag und Bekanntmachung des Hinweises auf die Patenterteilung: **19.05.2004**
(21) Anmeldenummer: 98928053.2
(22) Anmeldetag: 23.03.1998
(51) Int. Cl.: G01M 11/08, G01L 5/04

(54) **VERFAHREN UND VORRICHTUNG ZUR ZUGPRÜFUNG VON VERSPLEISSTEN FASERN IN FASERSPLEISSGERÄTEN**
METHOD AND DEVICE FOR CHECKING THE TENSILE RESISTANCE OF SPLICED FIBERS IN FIBER SPLICING DEVICES
PROCEDE ET DISPOSITIF POUR TESTER LA RESISTANCE A LA TRACTION DE FIBRES EPISSUREES DANS DES APPAREILS D'EPISSURAGE DE FIBRES

(30) Priorität: 04.04.1997 DE 19713979
(43) Veröffentlichungstag der Anmeldung: 19.01.2000
(73) Patentinhaber: SIEMENS AKTIENGESELLSCHAFT, 80333 München (DE)
(72) Erfinder: KOSSAT, Rainer, D-83229 Aschau (DE); MUESSIG, Dirk, D-81379 München (DE)
(86) Internationale Anmeldenummer: PCT/DE1998/000847
(87) Internationale Veröffentlichungsnummer: WO 1998/045676

(56) Entgegenhaltungen:
- EP-A- 0 549 131
- EP-A- 0 574 062
- WO-A-96/33430
- WO-A-97/37203
- US-A- 5 187 767
- PATENT ABSTRACTS OF JAPAN vol. 098, no. 002, 30. Januar 1998 & JP 09 280998 A (FUJIKURA LTD), 31. Oktober 1997
- PATENT ABSTRACTS OF JAPAN vol. 015, no. 051 (P-1163), 6. Februar 1991 & JP 02 282960 A (SANYO ELECTRIC CO LTD), 20. November 1990
- PATENT ABSTRACTS OF JAPAN vol. 097, no. 008, 29. August 1997 & JP 09 096596 A (FUJIKURA LTD), 8. April 1997

## Beschreibung

Die Erfindung bezieht sich auf ein Verfahren und eine Vorrichtung zur Zugprüfung von verspleißten Fasern in Faserspleißgeräten nach dem Oberbegriff des Patentanspruchs 1.

Zum Verbinden der in der optischen Nachrichtentechnik verstärkt eingesetzten Glasfasern sind zwei Verfahren bekannt: Zum einen das Einkleben von Faserendflächen in vorkonfektionierte und genormte Stecker und zum anderen das Verspleißen von Fasern mit präparierten Faserendflächen zu einer einzigen Faser. Beim Verspleißen der Fasern in Faserspleißgeräten werden zwei Fasern mit präparierter Endfläche auf zwei Schlitten befestigt, die dann mit Justiereinrichtungen verfahren werden können, damit die Faserendflächen gut zueinander justiert werden. Nach der Justage werden die beiden Faserenden dann im allgemeinen thermisch verschweißt. Für die Qualitätskontrolle eines Spleißes sind anschließend sowohl die durch den Spleiß verursachte Zusatzdämpfung zu messen als auch die vom Spleiß ausgehaltene Zugspannung zu überprüfen.

Aus der Veröffentlichung "Thermische LWL-Spleißtechnik setzt sich durch" (V. Riech, telcom report 18, (1995), Heft 3, Seiten 136 bis 139), ist ein Spleißgerät bekannt, bei dem ein fertiger Spleiß noch im Gerät auf Zugfestigkeit getestet werden kann (Seite 138, 3. Spalte, 2. Abs.). Dabei wird der Spleiß mit einer eingebauten Rückstellfeder eines Schlittens mit einer von der Rückstellkraft der Rückstellfeder abhängigen festen Zugprüfspannung belastet. Die Zugprüfspannung wird bei Montage des Faserspleißgerätes fest eingestellt und ist anschließend nicht mehr veränderbar, was beim Spleißen unterschiedlicher Fasertypen (einwellige oder mehrwellige Fasern, Stufenindex- oder Gradientenfasern) für unterschiedliche Anwendungen nachteilig ist. Außerdem hängt die auf den Spleiß wirkende Zugspannung vom Einlegen der Faser ab, ist damit vom Benutzer abhängig und zum Überprüfen auf genormte Zugprüfspannungen nicht geeignet. Ein solches Zugfestigkeitsmeßgerät ist auch aus US-A-5187767 bekannt.

Der vorliegenden Erfindung liegt die Aufgabe zugrunde, ein Verfahren zur Zugprüfung in Faserspleißgeräten zu entwickeln, bei dem der Benutzer die Zugprüfspannung je nach zu spleißendem Fasertyp selbst vorwählt und die Zugprüfspannung unabhängig vom Einlegen der Faser ist.

Die Aufgabe wird erfindungsgemäß durch ein Verfahren mit den kennzeichnenden Merkmalen des Patentanspruches 1 gelöst.

Durch das erfindungsgemäße Verfahren wird dem Benutzer eines Faserspleißgerätes die Möglichkeit gegeben, die Zugprüfspannung nach seinem Ermessen und eventuell unterschiedlichen Normen für unterschiedliche Fasertypen einzustellen, was vor allem beim Spleißen unterschiedlicher Fasertypen mit demselben Faserspleißgerät von Vorteil ist.

Des weiteren zeichnet sich das erfindungsgemäße Verfahren durch eine höhere Genauigkeit gegenüber dem aus dem Stand der Technik bekannten Verfahren mit der Rückstellfeder aus. Darüber hinaus ist es nicht mehr notwendig, die Rückstellkraft der Feder bei der Inbetriebnahme eines Faserspleißgerätes von Hand einzustellen.

Zur Messung der auf den Faserspleiß wirkenden Zugspannung lassen sich beispielsweise am Schlitten befestigte Dehnungsmeßstreifen oder Piezoaktoren einsetzen. In einer bevorzugten Ausführungsform nach dem abhängigen Anspruch 2 wird ein Piezoaktor zur Messung mitbenutzt, der bereits in Faserspleißgeräten zur Justage der Faserteilstücke vor dem Verspleißen vorhanden ist.

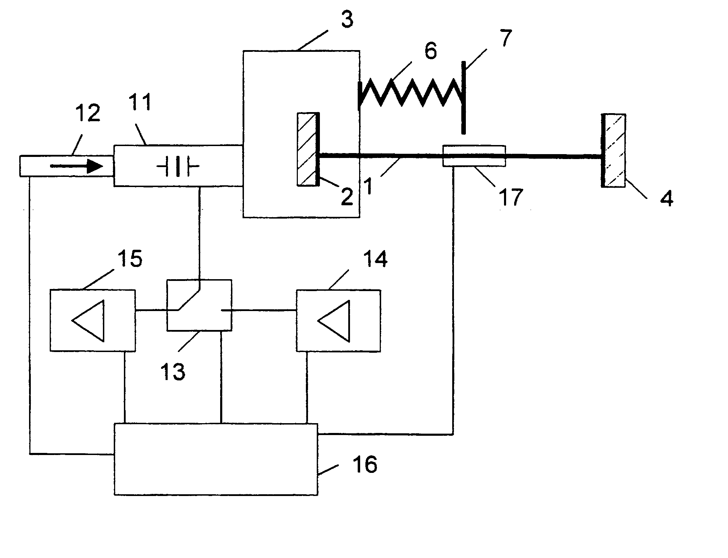

Anhand des in der Zeichnung dargestellten Ausführungsbeispiels wird die Erfindung näher erläutert.

Dabei zeigt die einzige Figur der Zeichnung den schematischen Aufbau einer Vorrichtung zur Durchführung des erfindungsgemäßen Verfahrens.

In der Figur ist dargestellt, daß zum Verspleißen eines ersten Faserteilstücks mit präparierter Endfläche und eines zweiten Faserteilstücks mit präparierter Endfläche zu einer einzigen Faser 1 das erste Faserteilstück in eine erste Befestigungsvorrichtung 2 auf einem ersten Schlitten 3 eingespannt wird, und das zweite Faserteilstück in eine zweite Befestigungsvorrichtung 4 auf einem zweiten nicht dargestellten Schlitten. Ebenfalls nicht dargestellte Justiereinrichtungen am ersten und am zweiten Schlitten sorgen dafür, daß in zwei Richtungen senkrecht zueinander und parallel zu den Endflächen der beiden Fasern die Schlitten verschiebbar sind, damit die beiden Faserendflächen so zueinander justiert werden können, daß ein möglichst kleiner Versatz senkrecht zu beiden Faserachsen entsteht. Ebenfalls nicht dargestellte Kontrollsysteme dienen zur Überwachung einer guten Justage, in dem entweder mit einem Mikroskop beide Faserendflächen zusammen betrachtet werden, oder Licht in das erste Faserteilstück eingekoppelt wird und die vom ersten in das zweite Faserteilstück über beide Endflächen eingekoppelte Lichtleistung detektiert wird. Der erste Schlitten 3 ist über eine Rückstellfeder 6 senkrecht zur Endfläche des ersten Faserteilstücks mit einer weiteren Befestigungsvorrichtung 7 auf dem Faserspleißgerät verbunden. Eine weitere Justiereinrichtung, bestehend aus einem Piezoaktor 11 und einem weiteren Antrieb 12, verschiebt den ersten Schlitten 3 senkrecht zur Endfläche des ersten Faserteilstücks. Mit Hilfe dieser weiteren Justiervorrichtung lassen sich das erste Faserteilstück und das zweite Faserteilstück aufeinanderzu- und voneinanderwegbewegen. Der Piezoaktor 11 ist dabei über einen Umschalter 13 entweder mit der Piezoendstufe 14 oder mit einem Meßverstärker 15, beispielsweise einem hochohmigen Elektrometerverstärker, verbunden. Eine Steuereinrichtung 16 ist sowohl mit dem weiteren Antrieb 12 als auch mit dem Meßverstärker 15, dem Umschalter 13 und der Piezoendstufe 14 verbunden sowie mit der Spleißvorrichtung 17 zum Verspleißen der beiden Faserteilstücke. Nach dem Spleißvorgang wird der Piezoaktor 11 über die Piezoendstufe 14 auf einen von der Steuereinrichtung 16 voreingestellten elektrischen Spannungswert aufgeladen. Anschließend wird der Umschalter 13 von der Steuereinrichtung 16 kontrolliert umgeschaltet, damit der Piezoaktor 11 mit dem Meßverstärker 15 verbunden ist, der die am Piezoaktor 11 anliegenden elektrischen Spannungen mißt und an die Steuereinrichtung 16 übermittelt. Diese elektrische Spannung wird nun weiterhin gemessen, während von der Steuereinrichtung 16 kontrolliert der weitere Antrieb 12 so betrieben wird, daß sich der erste Schlitten 3 vom zweiten Schlitten wegbewegt. Durch das Wegfahren des ersten Schlitten 3 wird sowohl die Faser 1 wie auch der Piezoaktor 11 einer Zugspannung durch die Rückstellfeder 6 unterworfen. Der bekannte Piezoeffekt bewirkt dabei, daß die Zugspannung am Piezoaktor 11 sich in eine veränderte anliegende elektrische Spannung umsetzt. Der Vergleich der gemessenen elektrischen Spannung mit voreingestellten Werten ergibt die an der Faser 1 anliegende Zugspannung, wodurch der weitere Antrieb 12 so lange zurückgefahren werden kann, bis die voreingestellte Zugprüfspannung für den Faserspleiß erreicht ist.

## Patentansprüche

1. Verfahren zur Zugprüfung von Faserspleißen in Faserspleißgeräten mit einer zwischen einer ersten Befestigungseinrichtung (2) auf einem Schlitten (3) und einer zweiten Befestigungseinrichtung (4) am Faserspleißgerät eingespannten verspleißten Faser (1), mit einer Justiereinrichtung, die den Schlitten (3) gegen eine am Faserspleißgerät befestigte Rückstellfeder (6) in Faserrichtung bewegt und mit einer Steuereinrichtung (16) zum Betrieb der Justiereinrichtung,
wobei die auf die verspleißte Faser (1) wirkende Zugspannung durch eine mit der Steuereinrichtung verbundene Meßeinrichtung gemessen wird, während der Schlitten (3) durch die Justiereinrichtung solange von der zweiten Befestigungsvorrichtung (4) weggefahren wird, bis die von der Meßvorrichtung gemessene Zugspannung einer durch die Steuereinrichtung (16) vorgegebenen Zugprüfspannung entspricht.

2. Verfahren zur Zugprüfung nach Anspruch 1,
**dadurch gekennzeichnet,**
**daß** die Justiereinrichtung einen Antrieb (12) und einen über eine Piezoendstufe(13) mit der Steuereinrichtung (16) verbundenen Piezoaktor (11) beinhaltet, wobei der Piezoaktor (11) auch als Meßvorrichtung dient,
**daß** beim Wegfahren des Schlittens (3) die am Piezoaktor anliegende elektrische Spannung gemessen wird,
**daß** der Schlitten solange zurückgefahren wird, bis die am Piezoaktor anliegende elektrische Spannung einer durch die Steuereinrichtung (16) vorgegebenen Zugprüfspannung entspricht.

3. Vorrichtung zum Durchführen ein Verfahren zur Zugprüfung von Faserspleißen in Faserspleißgeräten bei welchen einer zwischen einer ersten Befestigungseinrichtung (2) auf einem Schlitten (3) und einer zweiten Befestigungseinrichtung (4) am Faserspleißgerät verspleißten Faser (1) eingespannt ist, mit einer Justiereinrichtung, die den Schlitten (3) gegen eine am Faserspleißgerät befestigte Rückstellfeder (6) in Faserrichtung bewegt,
wobei die Justiereinrichtung einen Antrieb (12) und einen über eine Piezoendstufe mit einer Steuereinrichtung (16) zum Betrieb der Justiereinrichtung verbundenen Piezoaktor (11) beinhaltet,
wobei ein mit der Steuereinrichtung (16) verbundener Umschalter (13) vorgesehen ist, der den Piezoaktor (11) von der Piezoendstufe (14) abkoppelt und an einen mit der Steuereinrichtung (16) verbundenen Meßverstärker (15) zur elektrischen Spannungsmessung anschließt.

## Claims

1. Method for tensile testing of fibre splices in fibre splicing appliances having a spliced fibre (1) held between a first securing device (2) on a sliding member (3) and a second securing device (4) on the fibre splicing appliance, having an alignment device that moves the sliding member (3) in the fibre direction against a return spring (6) attached to the fibre splicing appliance, and having a control device (16) for operating the alignment device,
the tensile stress acting on the spliced fibre (1) being measured by a measurement device connected to the control device while the sliding member (3) is moved away from the second securing device (4) by the alignment device until the tensile stress measured by the measurement device equals a tensile test stress preset by the control device (16).

2. Method according to Claim 1,
**characterized in that**
the alignment device contains a drive (12) and a piezo actuator (11) connected via a piezo output stage (14) to the control device (16), the piezo actuator (11) also serving as a measurement device,
that when the sliding member (3) is moved away the voltage across the piezo actuator is measured,
that the sliding member is moved back until the voltage across the piezo actuator equals a tensile test stress preset by the control device (16).

3. Device for implementing a method for tensile testing of fibre splices in fibre splicing appliances in which a spliced fibre (1) is held between a first securing device (2) on a sliding member (3) and a second securing device (4) on the fibre splicing appliance, having an alignment device that moves the sliding member (3) in the fibre direction against a return spring (6) attached to the fibre splicing appliance, the alignment device containing a drive (12) and a piezo actuator (11) connected via a piezo output stage to a control device (16) for operating the alignment device,
a changeover switch (13) connected to the control device (16) being provided that decouples the piezo actuator (11) from the piezo output stage (14) and connects it to an instrumentation amplifier (15), connected to the control device (16), for measuring the voltage.

## Revendications

1. Procédé d'essai en traction d'épissures de fibres dans des appareils d'épissage de fibres qui comprennent une fibre épissée (1) serrée entre un premier dispositif de fixation (2) sur un chariot (3) et un deuxième dispositif de fixation (4) sur l'appareil d'épissage de fibres et un dispositif d'ajustement qui déplace le chariot (3) dans la direction des fibres en opposition à un ressort de rappel (6) fixé sur l'appareil d'épissage de fibres, ainsi qu'un dispositif de commande (16) qui actionne le dispositif d'ajustement, la contrainte de traction qui agit sur les fibres épissurées (1) étant mesurée par un dispositif de mesure relié au dispositif de commande, tandis que le chariot (3) est éloigné du deuxième dispositif de fixation (4) par le dispositif d'ajustement jusqu'à ce que la contrainte de traction mesurée par le dispositif de mesure corresponde à une contrainte d'essai en traction prédéterminée par le dispositif de commande (16).

2. Procédé d'essai en traction selon la revendication 1,
**caractérisé en ce que**
le dispositif d'ajustement contient un entraînement (12) et un piézo-actuateur (11) relié au dispositif de commande (16) par un étage piézo terminal (13), le piézo-actuateur (11) servant également de dispositif de mesure,
**en ce que** lorsque le chariot (3) est éloigné, la tension électrique appliquée sur le piézo-actuateur est mesurée et
**en ce que** le chariot est reculé jusqu'à ce que la tension électrique appliquée sur le piézo-actuateur corresponde à une tension d'essai en traction prédéterminée par le dispositif de commande (16).

3. Dispositif en vue de la mise en oeuvre d'un procédé d'essai en traction d'épissures de fibres dans des appareils d'épissage de fibres dans lequel une fibre (1) épissée est serrée entre un premier dispositif de fixation (2) prévu sur un chariot (3) et un deuxième dispositif de fixation (4) prévu sur l'appareil d'épissage de fibres, avec un dispositif d'ajustement qui déplace le chariot (3) dans la direction des fibres en opposition à un ressort de rappel (6) fixé sur l'appareil d'épissage de fibres, le dispositif d'ajustement contenant un entraînement (12) et un piézo-actuateur (11) relié par l'intermédiaire d'un étage piézo terminal à un dispositif de commande (16) pour la commande du dispositif d'ajustement, un commutateur (13) relié au dispositif de commande (16) étant prévu, qui découple le piézo-actuateur (11) de l'étage piézo terminal (14) et qui raccorde un amplificateur de mesure (15) relié au dispositif de commande (16) pour mesurer la tension électrique.
